# EUROPEAN PATENT APPLICATION

(11) **EP 4 460 051 A1**
(43) Date of publication of application: **06.11.2024**
(21) Application number: 22915208.7
(22) Date of filing: 30.12.2022
(51) Int. Cl.: H04W 4/24

(54) **OPERATION DETERMINATION METHOD, INFORMATION SENDING METHOD, TERMINAL DEVICE, AND NETWORK DEVICE**

(30) Priority: 31.12.2021 CN 202111666582
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100032 (CN); TAN, Jiayao, Beijing 100032 (CN)
(74) Representative: Maiwald GmbH
(86) International application number: PCT/CN2022/144042
(87) International publication number: WO 2023/125960

(57) **Abstract**

The present disclosure relates to the technical field of communications. Provided are an operation determination method, an information sending method, a terminal device, and a network device. The operation determination method comprises: receiving network assistance information and a first state parameter which are sent by a network device; and determining an operation of a terminal device on the basis of the network assistance information and the first state parameter.

## Description

### CROSS-REFERENCE TO RELATED APPLICATION

This disclosure claims priority to Chinese Patent Application Serial No. 202111666582.3, filed in China on December 31, 2021, the entire content of which is incorporated herein by reference.

### FIELD

The present disclosure relates to the field of communication technology, and particularly to an operation determination method, an information sending method, a terminal device, and a network device.

### BACKGROUND

In a Discontinuous Reception (DRX) mode, a terminal device periodically monitors a Physical Downlink Control Channel (PDCCH) without continuous monitoring, i.e., in the DRX mode, a DRX cycle includes an active duration and an inactive duration. During the active duration, the terminal device monitors the PDCCH, and during the inactive duration, the terminal device does not monitor the PDCCH, which thus prevent the terminal device from continuous monitoring, achieving a purpose of power saving.

However, during a communication process between the terminal device and a network device, data transmission may be performed through the network. However, the terminal device is prone to have no network coverage during the active duration, and effective monitoring cannot be achieved even if the terminal device enters the active duration, resulting in a waste of power, i.e., it is prone to cause a poor power saving effect of the terminal device in the DRX mode.

### SUMMARY

Embodiments of the present disclosure provide an operation determination method, an information sending method, a terminal device, and a network device, to solve a problem of poor power saving effect of a terminal device in a DRX mode in the related art.

To address the above technical problem, the present disclosure is implemented as follows.

In a first aspect, embodiments of the present disclosure provide an operation determination method, performed by a terminal device, in which the operation determination method includes:
receiving network assistance information and a first state parameter sent by a network device; and
determining an operation of the terminal device based on the network assistance information and the first state parameter.

In a second aspect, embodiments of the present disclosure provide another operation determination method, performed by a network device, in which the operation determination method includes:
determining a first state parameter based on a service characteristic of a terminal device; and
sending network assistance information and the first state parameter to the terminal device.

In a third aspect, embodiments of the present disclosure provide a terminal device, including:
a first receiving module, configured to receive network assistance information and a first state parameter sent by a network device; and
a first determination module, configured to determine an operation of the terminal device based on the network assistance information and the first state parameter.

In a fourth aspect, embodiments of the present disclosure provide a network device, including:
a second determination module, configured to determine a first state parameter based on a service characteristic of a terminal device; and
a first sending module, configured to send network assistance information and the first state parameter to the terminal device.

In a fifth aspect, embodiments of the present disclosure provide a terminal device, and the terminal device includes a transceiver and a processor, in which
the transceiver is configured to receive network assistance information and a first state parameter sent by a network device; and
the processor is configured to determine an operation of the terminal device based on the network assistance information and the first state parameter.

In a sixth aspect, embodiments of the present disclosure provide a network device, and the network device includes a transceiver and a processor, in which
the processor is configured to determine a first state parameter based on a service characteristic of a terminal device; and
the transceiver is configured to send network assistance information and the first state parameter to the terminal device.

In a seventh aspect, embodiments of the present disclosure provide a terminal device including a processor, a memory, and a program stored on the memory and capable of running on the processor, when the program is executed by the processor, steps of the operation determination method according to the first aspect are implemented.

In an eighth aspect, embodiments of the present disclosure provide a network device including a processor, a memory, and a program stored on the memory and capable of running on the processor, when the program is executed by the processor, steps of the operation determination method according to the second aspect are implemented.

In a ninth aspect, embodiments of the present disclosure provide a computer-readable storage medium, having stored therein a computer program that, when executed by a processor, steps of the method according to the first aspect are implemented, or steps of the method according to the second aspect are implemented.

In the embodiments of the present disclosure, during the process of determining the operation of the terminal device, not only the first state parameter is considered, but also the network assistance information sent by the network device is considered. The operation of the terminal device is determined based on both the network assistance information and the first state parameter, which improves an accuracy of determining the operation of the terminal device. The operation of the terminal device affects a power of the terminal device, thereby improving a power saving effect of the terminal device.

### BRIEF DESCRIPTION OF THE DRAWINGS

In order to provide a clear explanation of technical solutions of embodiments of the present disclosure, a brief introduction will be given below to accompanying drawings required in the description of the embodiments of the present disclosure. It is evident that the accompanying drawings are only some of the embodiments of the present disclosure. For those skilled in the art, other accompanying drawings can be obtained based on these drawings without creative labor.
Fig. 1 is a flowchart of an operation determination method provided in an embodiment of the present disclosure.
Fig. 2 is a schematic diagram of a Discontinuous Reception (DRX) inactive timer provided in an embodiment of the present disclosure.
Fig. 3 is a schematic diagram of a DRX Hybrid Automatic Repeat Request (HARQ) Round Trip Time (RTT) timer and a DRX retransmission timer provided in an embodiment of the present disclosure.
Fig. 4 is a schematic diagram of a state after sending a scheduling request (SR) provided in an embodiment of the present disclosure.
Fig. 5 is a flowchart of an information sending method provided in an embodiment of the present disclosure.
Fig. 6 is a first schematic diagram of a beam-hopping.
Fig. 7 is a second schematic diagram of a beam-hopping.
Fig. 8 is a schematic diagram of DRX.
Fig. 9 is a schematic diagram of a terminal device provided in an embodiment of the present disclosure.
Fig. 10 is a schematic diagram of a network device provided in an embodiment of the present disclosure.
Fig. 11 is a schematic diagram of a terminal device provided in an embodiment of the present disclosure.
Fig. 12 is a schematic diagram of a network device provided in an embodiment of the present disclosure.

### DETAILED DESCRIPTION

The following will provide a clear and complete description of technical solutions in embodiments of the present disclosure, in conjunction with the accompanying drawings in embodiments of the present disclosure. Obviously, the described embodiments are a part of, but not all, embodiments of the present disclosure. Based on embodiments of the present disclosure, all other embodiments obtained by those ordinary skilled in the art without creative labor fall within the scope of protection of the present disclosure.

The term "service" herein can refer to at least one of the following concepts: service, Protocol Data Unit (PDU) session, Quality of Service (QoS) stream, stream or service data flow, a radio bearer, and a logical channel.

The term "data" herein can refer to one or more of the following: "data packet", "Physical Uplink Share Channel transmission (PUSCH)", "Physical Downlink Share Channel transmission (PDSCH)", "data unit", "transmission", and "transmission block".

The Non-terrestrial Network (NTN) in the present disclosure uses typical network nodes such as satellites, high-altitude platforms (HAP), communication balloons, and/or aircraft, compared to traditional ground networks.

Terms "first", "second", etc. in specification and claims of the disclosure are used to distinguish similar objects, and do not need to be used to describe a specific order or a sequence. It should be understood that data used in this way can be interchanged in appropriate circumstances, so that the embodiments described herein, for example, can be implemented in order other than those illustrated or described herein. In addition, terms "include" and "have", as well as any variations thereof, are intended to cover non-exclusive inclusion, for example, a process, a method, a system, a product, or a device that includes a series of steps or units is not limited to those clearly listed steps or units, but may include other steps or units that are not clearly listed or inherent to these process, the method, the product, or the device. In the specification and claims, "and/or" represents at least one of connected objects.

Technologies described herein is not limited to a New Radio (NR) system or a Long Term Evolution (LTE)/ LTE-Advanced (LTE-A) system, and can also be used in various wireless communication systems, such as Code Division Multiple Access (CDMA), Time Division Multiple Access (TDMA), Frequency Division Multiple Access (FDMA), an Orthogonal Frequency Division Multiple Access (OFDMA), Single-carrier Frequency-Division Multiple Access (SC-FDMA) and other systems. Terms "system" and "network" are often used interchangeably. The CDMA system can implement wireless technologies such as CDMA2000 and Universal Terrestrial Radio Access (UTRA). The UTRA includes a Wideband Code Division Multiple Access (WCDMA) and other CDMA variants. The TDMA system can implement wireless technologies such as Global System for Mobile Communication (GSM). The OFDMA system can implement wireless technologies such as Ultra Mobile Broadband (UMB), Evolution-UTRA (E-UTRA), IEEE 802.21 (Wi-Fi), IEEE 802.16 (WiMAX), IEEE 802.20, Flash OFDM, etc. The UTRA and the E-UTRA are parts of a Universal Mobile Telecommunications System (UMTS). The LTE and a higher-level LTE (such as LTE-A) are new UMTS versions that use the E-UTRA. The UTRA, the E-UTRA, the UMTS, the LTE, the LTE-A, and the GSM are described in literature from an organization called "3rd Generation Partnership Project" (3GPP). The CDMA 2000 and the UMB are described in literature from an organization called "3rd Generation Partnership Project 2" (3GPP2). The technologies described herein can be applied to both the systems and the wireless technologies mentioned above, as well as other systems and wireless technologies. However, the following description describes the NR system for a purpose of examples and uses NR terms in most of the following description, although these techniques can also be applied to applications other than a NR system application.

The following description provides examples rather than limiting a scope, an applicability, or a configuration set forth in claims. Changes can be made to the functionality and arrangement of the discussed elements without departing from the spirit and scope of the present disclosure. Various examples can be appropriately omitted, replaced, or added with various regulations or components. For example, the described method can be executed in a different order than described, and various steps can be added, omitted, or combined. Additionally, features described with reference to certain examples can be combined in other examples.

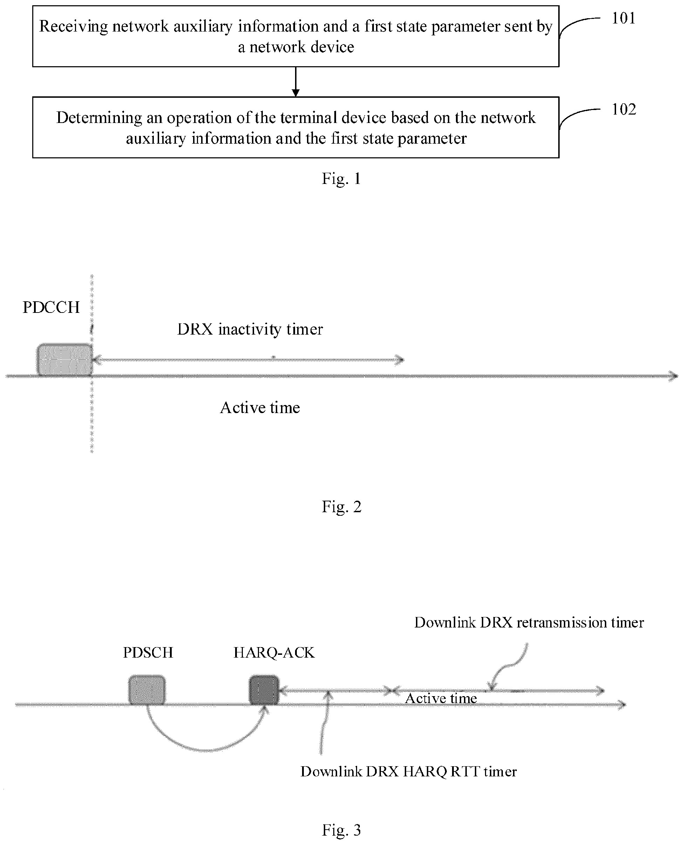

Refer to Fig. 1, Fig. 1 is a flowchart of an operation determination method provided in an embodiment of the present disclosure, the method is executed by a terminal device, and the method includes following steps.

Step 101, network assistance information and a first state parameter sent by a network device are received.

Step 102, an operation of the terminal device is determined based on the network assistance information and the first state parameter.

It should be noted that the network assistance information can be used to determine a network coverage situation of the terminal device, and the first state parameter can be understood as a parameter that affects a state of the terminal device. The network assistance information and the first state parameter are sent to the network device by the network device. After obtaining the network assistance information and the first state parameter, the terminal device can determine the operation of the terminal device based on the network assistance information and the first state parameter. Determining the operation of the terminal device can be determining that the terminal device enters a certain state.

In an example, the first state parameter is determined by the network device based on a service characteristic of the terminal device. The first state parameter includes at least one of the following:
a discontinuous reception (DRX) parameter; or
a paging parameter.

In an embodiment, during the process of determining the operation of the terminal device, not only the first state parameter is considered, but also the network assistance information sent by the network device is considered. The operation of the terminal device is determined based on both the network assistance information and the first state parameter, which improves an accuracy of determining the operation of the terminal device. The operation of the terminal device affects a power of the terminal device, thereby improving a power saving effect of the terminal device.

In an embodiment, the network assistance information includes at least one of the following information:
position information of at least one Non-Terrestrial Network;
orbit information of at least one Non-Terrestrial Network; or
beam information of at least one Non-Terrestrial Network, in which the beam information of the at least one Non-Terrestrial Network includes at least one of the following information:
   antenna gain information of the at least one Non-Terrestrial Network at a designated time point;
   antenna gain information of the at least one Non-Terrestrial Network at a designated position; or
   antenna gain information of the at least one Non-Terrestrial Network at a distance of a designated lowest point.

The network assistance information also includes at least one of the following information:
an effective time period and/or an update cycle of the position information of at least one Non-Terrestrial Network;
an effective time period and/or an update cycle of the orbit information of at least one Non-Terrestrial Network; or
an effective time period and/or an update cycle of the beam information of at least one Non-Terrestrial Network.

It should be noted that the position information of the Non-Terrestrial Network (such as a satellite) can be a position coordinate information of the satellite, such as a longitude, a latitude, an altitude, and/or an angle, can also be a first-order, second-order, and/or third-order time derivative information of satellite motion. The orbital information can be instantaneous or average orbital information. The terminal device can use the position information of the Non-Terrestrial Network and the position information of the terminal device to infer an effective coverage of the satellite over the terminal device, i.e., determining a coverage situation. The effective coverage can be determined using at least one of the following information: when the satellite starts to provide a coverage for the terminal device, when the satellite stops providing the coverage for the terminal device, a specific time period when the satellite provides the coverage for the terminal device, and a time period when the satellite is unable to provide the coverage for the terminal device. By utilizing the beam information of the Non-Terrestrial Network, the effective coverage of the satellite over the terminal device can be determined. Furthermore, based on an antenna gain of a beam, the effective coverage of the satellite over the terminal device can be more accurately determined.

In an embodiment, receiving the network assistance information sent by the network device includes at least one of the following:
receiving a system message and/or a dedicated signaling sent by a Non-Terrestrial Network node and/or another network node, and reading the network assistance information from the system message and/or the dedicated signaling; or
receiving system messages and/or dedicated signalings sent by a Non-Terrestrial Network node and/or another network node multiple times, and reading the network assistance information from the system messages and/or the dedicated signalings.

It should be noted that another network node can refer to other network nodes except for the Non-Terrestrial Network node. It can be understood that the above network device can be the Non-Terrestrial Network node and/or another network node. Due to a large size of ephemeris information, when a memory of the Non-Terrestrial Network node is limited or a size of a signaling sent is limited, the ephemeris information can be sent by a plurality of network nodes, or information of different satellites can be sent by the network node in batches at different time points.

In an embodiment, receiving the system message and/or the dedicated signaling sent by the Non-Terrestrial Network node and/or another network node and reading the network assistance information from the system message and/or the dedicated signaling includes at least one of the following:
merging, by the terminal device, the system message and/or the dedicated signaling sent by the Non-Terrestrial Network node and/or another network node to obtain first merged information, and reading the network assistance information from the first merged information; or
merging, by the terminal device, the system message and/or the dedicated signaling sent by a plurality of Non-Terrestrial Network nodes to obtain second merged information, and reading the network assistance information from the second merged information.

For example, the terminal device obtains a first part of the ephemeris information from a satellite network node 1, and obtains a second part of the ephemeris information from a satellite network node 2, and then merges the first part of the ephemeris information and the second part of the ephemeris information to obtain the required or complete ephemeris information.

Or, the terminal device obtains a first part of the ephemeris information from a satellite network node 1, and may continue to obtain a second part of the ephemeris information and a third part of the ephemeris information from a satellite network node 2 and a satellite network node 3, respectively, and then merges the first part of the ephemeris information, the second part of the ephemeris information and the third part of the ephemeris information to obtain the required or complete ephemeris information.

Or, the terminal device obtains a first part of the ephemeris information from a satellite network node 1, and may continue to obtain a second part of the ephemeris information from a satellite network node 2 during a T2 time period and obtain a third part of the ephemeris information from a satellite network node 3during a T3 time period, and then merges the first part of the ephemeris information, the second part of the ephemeris information and the third part of the ephemeris information to obtain the required or complete ephemeris information.

Or, the terminal device obtains a first part of the ephemeris information from a satellite network node 1, and may continue to obtain a second part of the ephemeris information from a SIBx (system information block x, or system message x) and a SIBy (system message y) of a satellite network node 2 and obtain a third part of the ephemeris information from a SIBx of a satellite network node 3, and then merges the first part of the ephemeris information, the second part of the ephemeris information and the third part of the ephemeris information to obtain the required or complete ephemeris information.

Or, the terminal device obtains information of a sending cycle required for obtaining the required or complete ephemeris information and information of sending a starting position from a satellite network node 1, and the terminal device can obtain a first part of the ephemeris information, a second part of the ephemeris information and a third part of the ephemeris information during a T1 time period, a T2 time period, and a T3 time period, respectively, and then merge the first part of the ephemeris information, the second part of the ephemeris information and the third part of the ephemeris information to obtain the required or complete ephemeris information.

Or, the terminal device obtains information of a sending cycle required for obtaining the required or complete ephemeris information and information of sending a starting position from a satellite network node 1, and the terminal device can obtain a first part of the ephemeris information at a SIBx during a T1 time period, obtain a second part of the ephemeris information at a SIBy during a T2 time period, and obtain a third part of the ephemeris information at a SIBz during a T3 time period, and then merges the first part of the ephemeris information, the second part of the ephemeris information and the third part of the ephemeris information to obtain the required or complete ephemeris information.

Or, the terminal device obtains information of a sending cycle required for obtaining the required or complete ephemeris information and information of sending a starting position from a satellite network node 1, and the terminal device can obtain a first part of the ephemeris information, a second part of the ephemeris information and a third part of the ephemeris information at a SIBx during a T1 time period, a T2 time period, and a T3 time period, respectively, and then merge the first part of the ephemeris information, the second part of the ephemeris information and the third part of the ephemeris information to obtain the required or complete ephemeris information.

It should be noted that the above methods can be partially or fully combined to use.

The above information can be informed to the terminal device by the Non-Terrestrial Network, a terrestrial network, and/or a core network.

Due to the large size of ephemeris information, when the memory of the Non-Terrestrial Network node is limited or the size of the signaling sent is limited, the ephemeris information can be sent by a plurality of network nodes, and be merged by the terminal device to obtain a wealth of assistance information such as the beams or the positions of the satellites.

In an embodiment, receiving the system messages and/or the dedicated signalings sent by the Non-Terrestrial Network node and/or another network node multiple times and reading the network assistance information from the system messages and/or the dedicated signalings include at least one of the following:
receiving, by the terminal device the system messages and/or the dedicated signalings sent by the Non-Terrestrial Network node multiple times, obtaining third merged information by merging the system messages and/or the dedicated signalings, and reading the network assistance information from the third merged information;
receiving, by the terminal device, the system messages and/or the dedicated signalings sent by the another network node multiple times, obtaining fourth merged information, and reading the network assistance information from the fourth merged information; and
receiving, by the terminal device, the system messages and/or the dedicated signalings sent by the Non-Terrestrial Network node and the another network node multiple times, obtaining a fifth merged information, and reading the network assistance information from the fifth merged information.

In this embodiment, information of different satellites can be sent by the network node in batches at different time points, and then be merged by the terminal device to obtain a wealth of assistance information such as the beams or the positions of the satellites.

In an embodiment, a short message sent by the network device is received, in which the short message includes a first identifier configured to indicate whether information related to the Non-Terrestrial Network exists, and the terminal device obtains the network assistance information based on the first identifier.

A first association relationship, broadcasted by the network device in the system message, of a plurality of system messages containing segments of the network assistance information is received. The terminal device obtains the network assistance information based on the first association relationship, and the first association relationship includes labels and/or an order of the system messages indicating at least one segment of the network assistance information.

A second association relationship, broadcasted by a plurality of network devices in the system messages, of the system messages containing at least one segment of the network assistance information is received.

The SIB broadcasted by the network device is received, and the SIB includes a first field, in which the terminal device determines at least one of the following based on information indicated by the first field:
the SIB containing the network assistance information or not;
the network assistance information contained in the SIB being complete or partial;
a position of a segment of the network assistance information contained in the SIB in the network assistance information;
whether a segment of the network assistance information contained in the SIB is followed by a related segment of the network assistance information; or
the SIB being a last SIB containing ephemeris information or not.

The second association relationship includes at least one of the following information:
another network device information where a segment carrying the network assistance information is located;
a number of the segments of the network assistance information;
a number of satellites and/or information of the satellites; or
a label of a SIB where a segment of the network assistance information is located.

The terminal device obtains the network assistance information based on the second association relationship.

The short message, i.e., Short Message, can include the first identifier, in which the first identifier can indicate the network assistance information. The terminal device can obtain the network assistance information based on an instruction of the first identifier. The association relationship broadcasted is an association relationship between a plurality of SIBs, a SIB in the plurality of SIBs includes a part of the network assistance information, and the terminal device can obtain the network assistance information based on the association relationship. In addition, the SIB broadcasted by the network device can be received, the SIB includes the first field, such as a sib-Seg field, and the terminal device can determine at least one of the following information based on the information indicated by the field:
whether the SIB contains the network assistance information or not;
whether the network assistance information contained in the SIB is complete or partial;
a position of the part of the network assistance information contained in the SIB in the network assistance information;
whether s segment of the network assistance information contained in the SIB is followed by s related segment of the network assistance information; or
whether the SIB is a last SIB containing ephemeris information or not, for example, if it is set to true, it indicates that there is still related SIB broadcasting the ephemeris information after the SIB, and if it is set to false, it indicates that this is the last SIB that contains the ephemeris information.

Specifically, for example, a new identifier is added in the Short Message to indicate whether the information of the satellite exists, and the terminal obtains the related ephemeris information based on the indication of the identifier.

The network node broadcasts the association relationship of a plurality of system messages containing the ephemeris information in system information, and the terminal device obtains the related ephemeris information based on the association relationship.

A field (such as the sib-Seg) is added to the system message containing the ephemeris information. If the field is set to true, it indicates that there is still related SIB broadcasting the ephemeris information after the current SIB, and if the field is set to false, it indicates that the current SIB is the last SIB containing the ephemeris information.

In an embodiment, the DRX parameter includes durations of a plurality of timers of DRX, and the plurality of timers include a DRX inactive timer. The DRX inactive timer is started when the terminal device receives a physical downlink control channel (PDCCH) and the PDCCH indicates a new data transmission.

Determining the operation of the terminal device based on the network assistance information and the first state parameter includes any of the following:
during operation of the DRX inactive timer, entering an inactive state in a case that it is determined, according to the network assistance information, that o beam is available during the operation of the DRX inactive timer;
during operation of the DRX inactive timer, entering, by the terminal device, an inactive state in a case that it is determined, according to the network assistance information, that a duration in which no beam is available is less than a duration of the DRX inactive timer and greater than a first duration during the operation of the DRX inactive timer, and entering an active state in a case that the duration in which no beam is available is ended during the operation of the DRX inactive timer; and
during operation of the DRX inactive timer, maintaining a current active state in a case of determining, according to the network assistance information, that a duration in which no beam is available is less than or equal to the first duration during the operation of the DRX inactive timer.

As shown in Fig. 2, the DRX inactive timer, namely a drx-InactivityTimer, is started when the physical downlink control channel (PDCCH) is received and the PDCCH indicates a new data transmission, and the terminal device enters a dormant state (inactive state) when the DRX inactive timer overtimes. During the operation of the drx-InactivityTimer, the terminal device enters the dormant state in advance if it is detected that no beam is available based on the network assistance information sent by the network device. During a middle period of the operation of the drx-InactivityTimer, if a duration nonB 1 in which no beam is available is greater than or equal to a first duration k1, the terminal device enters the dormant state, and the timer is not reset and keeps operating, and the terminal device wakes up and enters an On duration state (active state) after the nonB1 ends. During the middle period of the operation of the drx-InactivityTimer, if a duration nonB 1 in which no beam is available is less than the first duration k1, the terminal device does not enter the dormant state and maintains the current On Duration state. In this embodiment, not only the DRX inactive timer is considered, but also the network assistance information is considered. Whether there is an available beam can be determined based on the network assistance information, and the terminal device performs state switching based on both the DRX inactive timer and the network assistance information, which can improve the power saving effect of the terminal device. As an example, the first duration can be a sum of a duration of processing received downlink data by the terminal device and a feedback duration of a hybrid automatic retransmission request (HARQ), or a duration of a downlink DRX retransmission timer.

In an embodiment, a plurality of timers include a DRX Hybrid Automatic Repeat Request (HARQ) Round Trip Time (RTT) timer and a DRX retransmission timer. The DRX HARQ RTT timer is started when the terminal device has an error in decoding received physical downlink shared channel (PDSCH).

Determining the operation of the terminal device based on the network assistance information and the first state parameter includes:
during operation of the DRX HARQ RTT timer, maintaining a current inactive state in a case that it is determined, according to the network assistance information, that a duration in which no beam is available during a first period is greater than or equal to a second duration, and not starting the DRX retransmission timer in a case that the DRX HARQ RTT timer overtimes and is reset; and
during operation of the DRX HARQ RTT timer, maintaining a current inactive state in a case that it is determined, according to the network assistance information, that a duration in which no beam is available during the first period is less than the second duration, and starting the DRX retransmission timer in a case that the DRX HARQ RTT timer overtimes and is reset;
in which, the first period is a sum of an operation period of the DRX HARQ RTT timer and a second period, a start time point of the second period is a timeout time point of the DRX HARQ RTT timer, and an end time point of the second period is a time point of a sum of the timeout time point and a duration of the DRX retransmission timer.

The DRX retransmission timer, for example, is a drx-RetransmissionTimer, a DRX HARQ RTT timer, for example, is a DRX-HARQ-RTT-Timer, and the DRX-HARQ-RTT-Timer can be started in a case of a PDSCH decoding error. For example, a downlink drx-HARQ-RTT-Timer can be understood physically as a retransmission scheduling of a downlink process may be scheduled after the timer, and a scheduling window is within a drx-RetransmissionTimerDL (a downlink DRX retransmission timer). If it is detected that no beam is available during the operation of the timer-drx-HARQ-RTT-TimerDL based on the network assistance information sent by the network device, and a duration nonB2 in which no beam is available is greater than or equal to a second duration K2, the terminal device may maintain the current dormant state, the timer is reset, and the drx-RetransmissionTimerDL is not stated. That is to say, in this embodiment, not only the DRX HARQ RTT timer is considered, but also the network assistance information is considered. Whether there is an available beam can be determined based on the network assistance information, and the terminal device performs state switching based on both the DRX HARQ RTT timer and the network assistance information, which can improve the power saving effect of the terminal device. As an example, the second duration can be a sum of a duration of the DRX HARQ RTT timer and a duration of the DRX retransmission timer.

In an embodiment, determining the operation of the terminal device based on the network assistance information and the first state parameter includes any of the following:
during operation of the DRX retransmission timer, entering an inactive state in a case that it is determined, according to the network assistance information, that no beam is available during the operation of the DRX retransmission timer;
during operation of the DRX retransmission timer, entering an inactive state in a case that it is determined, according to the network assistance information, that a duration in which no beam is available during the operation of the DRX retransmission timer is less than a duration of the DRX retransmission timer and greater than a third duration, , and entering an active state in a case that the duration in which no beam is available ends during the operation of the DRX retransmission timer; or
during operation of the DRX retransmission timer, maintaining a current active state in a case that it is determined, according to the network assistance information, that a duration in which no beam is available during the operation of the DRX retransmission timer is less than or equal to a third duration.

As shown in Fig. 3, the drx-RetransmissionTimerDL is started after the drx-HARQ-RTT TimerDL timeouts, and the drx-HARQ-RTT-TimerDL is started after transmission of a last symbol of a PDSCH HARQ-ACK (Hybrid Automatic Repeat request Acknowledgement) feedback is completed, and each downlink process corresponds to one drx-HARQ-RTT-TimerDL/ drx-RetransmissionTimerDL. During the operation of the drx-RetransmissionTimerDL, if it is detected that no beam is available based on the network assistance information sent by the network device, the terminal device enters the dormant state in advance. During a middle period of the operation of the drx-RetransmissionTimerDL, if a duration nonB3 in which no beam is available is greater than or equal to a third duration K3, the terminal device enters the dormant state, and the timer does not reset and keeps operating, and the terminal device wakes up and enters the On Duration state after the nonB3 ends. During the middle period of the operation of the drx-RetransmissionTimerDL, if the duration nonB3 in which no beam is available is less than the k3, the terminal device does not enter the dormant state and maintains the current On Duration state. In this embodiment, not only the DRX retransmission timer is considered, but also the network assistance information is taken into account. Whether there is an available beam can be determined based on the network assistance information, and the terminal device performs state switching based on both the DRX retransmission timer and the network assistance information, which can improve the power saving effect of the terminal device. As an example, the third duration is a sum of a duration of processing received downlink data by the terminal device and a feedback duration of a HARQ.

In an embodiment, the plurality of timers further include a first timer, which is started after the terminal device sends a scheduling request (SR).

Determining the operation of the terminal device based on the network assistance information and the first state parameter includes any of the following:
during operation of the first timer, entering an inactive state in a case that it is determined, according to the network assistance information, that no beam is available during the operation of the first timer;
during operation of the first timer, controlling the terminal device to enter an inactive state in a case that it is determined, according to the network assistance information, that a duration in which no beam is available during the operation of the first timer is less than a duration of the first timer and greater than a fourth duration, and controlling the terminal to enter an active state in a case that the duration in which no beam is available during the operation of the first timer ends; or
during operation of the first timer, maintaining a current active state in a case that it is determined, according to the network assistance information, that a duration in which no beam is available during the operation of the first timer is less than or equal to a fourth duration.

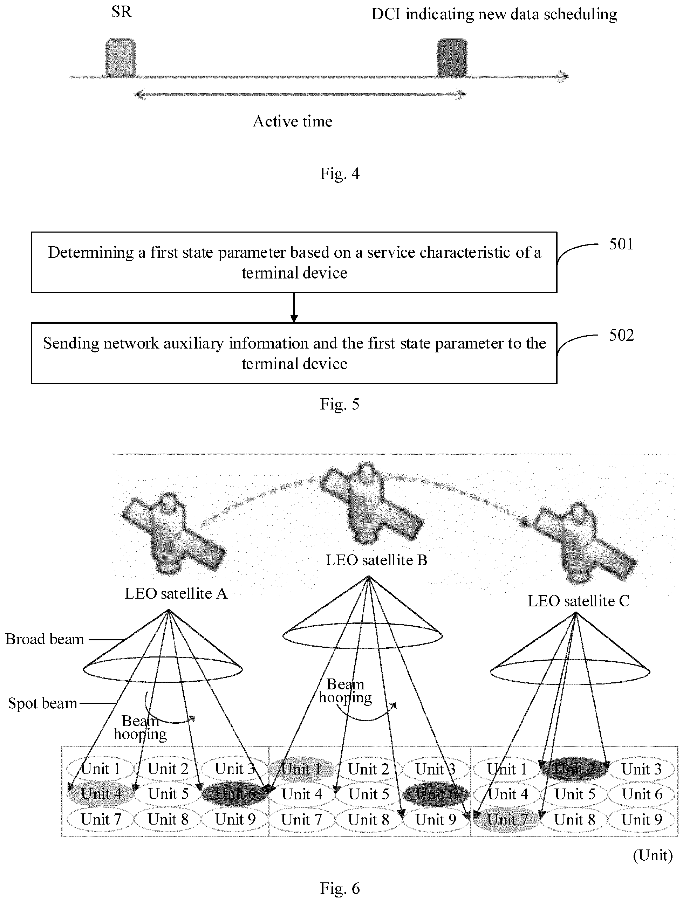

As shown in Fig. 4, DCI refers to Downlink Control Information, which is downlink control information. After a scheduling request (SR) is sent, the SR is in a pending (waiting) state before receiving an uplink new data scheduling, and this period also belongs to the On Duration time. During a middle period of operation of the first timer, if a duration nonB4 in which no beam is available is greater than or equal to the fourth duration K4, the terminal device enters the dormant state, and the timer does not reset and keeps operating, and the terminal device wakes up and enters the On Duration state after the nonB4 ends. During the middle period of the operation of the first timer, if the duration nonB4 in which no beam is available is less than the K4, the terminal device does not enter the dormant state and maintains the current On Duration state. In this embodiment, not only the first timer is considered, but also the network assistance information is considered. Whether there is an available beam can be determined based on the network assistance information, and the terminal device performs the stat switching based on the first timer and the network assistance information, which can improve the power saving effect of the terminal device. As an example, the fourth duration is a duration from a time point when the terminal device sends a target scheduling request to a time point when the terminal device receives an uplink scheduling corresponding to the target scheduling request.

In an embodiment, the method further includes:
determining, by the terminal device, a paging occasion corresponding to the terminal device based on the paging parameter.

The terminal device maintains the On Duration state and performs paging message reception in a case that it is determined, according to the network assistance information, that a duration in which no beam is available at the paging occasion corresponding to the terminal device is less than a duration of one paging occasion. Or, the terminal device enters the inactive state and stops the paging message reception in a case that it is determined that the duration in which no beam is available at the paging occasion corresponding to the terminal device is greater than or equal to a duration of one paging occasion.

In this embodiment, by comparing the duration in which no beam is available at the paging occasion corresponding to the terminal device with the duration of one paging occasion based on the network assistance information, and state switching is performed based on a comparison result. That is, the terminal device maintains the On Duration state and performs the paging occasion reception in a case that the duration in which no beam is available at the paging occasion corresponding to the terminal device is less than the duration of one paging occasion, , or the terminal device enters the inactive state and stops the paging occasion reception in a case that it is determined that the duration in which no beam is available at the paging occasion corresponding to the terminal device is greater than or equal to the duration of one paging occasion. In this way, the power saving effect of the terminal device can be improved.

As shown in Fig. 5, Fig. 5 is a flowchart of an information sending method provided in an embodiment of the present disclosure, and the method is executed by a network device and includes following steps.

Step 501, a first state parameter is determined based on a service characteristic of a terminal device.

Step 502, a network assistance information and the first state parameter are sent to the terminal device.

In an embodiment, the network assistance information includes at least one of the following information:
position information of a Non-Terrestrial Network;
orbit information of a Non-Terrestrial Network; or
beam information of a Non-Terrestrial Network, in which the beam information of the Non-Terrestrial Network includes at least one of the following information:
   antenna gain information of the Non-Terrestrial Network at a designated time point;
   antenna gain information of the Non-Terrestrial Network at a designated position; or
   antenna gain information of the Non-Terrestrial Network at a distance of a designated lowest point.

In an embodiment, sending the network assistance information and the first state parameter to the terminal device includes at least one of the following:
sending a system message and/or a dedicated signaling to the terminal device, in which the system message and/or the dedicated signaling includes the network assistance information; or
sending system messages and/or dedicated signalings to the terminal device multiple times, in which the system messages and/or the dedicated signalings include the network assistance information.

In an embodiment, sending the network assistance information to the terminal device further includes at least one of the following:
sending a short message to the terminal device, in which the short message includes a first identifier configured to indicate whether information related to the Non-Terrestrial Network exists, and the first identifier is configured for the terminal device to obtain the network assistance information based on the first identifier;
broadcasting a first association relationship of a plurality of system messages containing segments of the network assistance information to the terminal device through the system message, in which the first association relationship is configured for the terminal device to obtain the network assistance information based on the association relationship; or
broadcasting a system information block (SIB) to the terminal device, in which the SIB includes a first field, and information indicated by the first field is configured for the terminal device to determine at least one of the following based on the information indicated by the first field:
   the SIB containing the network assistance information or not;
   the network assistance information contained in the SIB being complete or partial;
   a position of a segment of the network assistance information contained in the SIB in the network assistance information;
   whether a segment of the network assistance information contained in the SIB is followed by a related segment of the network assistance information; or
   the SIB being a last SIB containing ephemeris information or not.

Below is a specific embodiment to explain the process of the above method in detail.

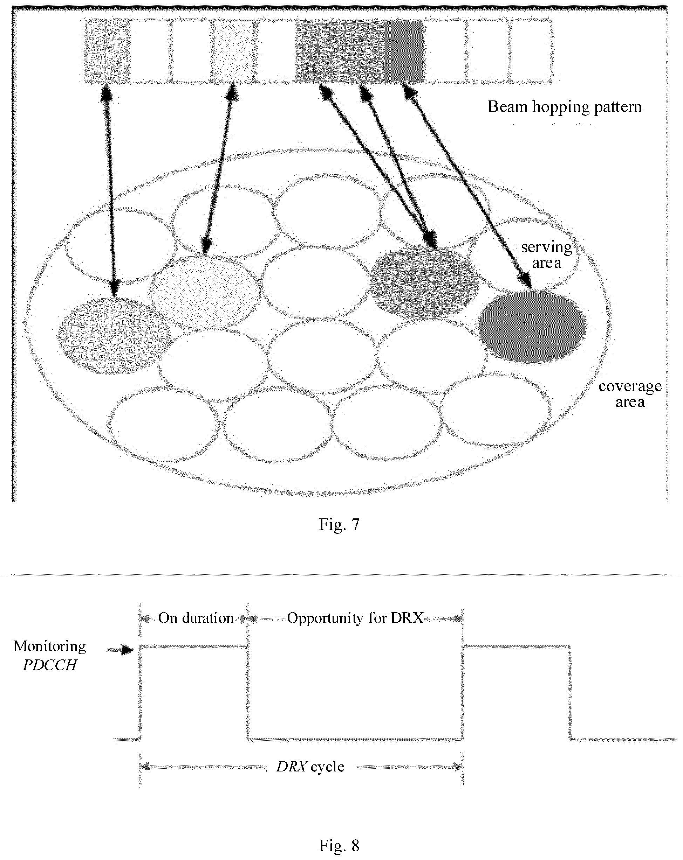

With a continuous development of satellite antenna technology, a current broadband satellite system mostly adopts a multi-point beam satellite to enhance a system capacity. Currently, the multi-point beam satellite communication system reuses a frequency of each beam in a payload design, and there is no fixed allocation method for a radio frequency power. A multi-beam antenna technology, as one of the necessary technologies for a broadband satellite communication system, has been widely applied in many practical satellite communication systems. A traditional multi-beam satellite evenly distributes broadband and power to each point beam. However, due to an uneven distribution and demand of ground services, a resource utilization of the satellite system is not high, and an actual communication capacity is greatly reduced. In order to solve a problem of mismatch between satellite resource requirements and configurations, beam hopping (BH) has been developed on a basis of the traditional multi-beam technology, as shown in Fig. 6 and Fig. 7. An entire satellite bandwidth is allocated to each beam in a unit of a time slot, and this flexible allocation method can better meet different service needs of various beams. The satellite beam hopping technology can allocate resources in four dimensions: space, time, frequency, and power. With its superior flexibility, resource utilization efficiency, and an ability to adapt to a dynamic change of the ground service, the satellite beam hopping technology shows a good applicability in a high-throughput satellite system. In Fig. 6, LEO is a low-earth orbit satellite, and Unit represents a unit.

For a DRX cycle, as shown in Fig. 8, the terminal device is awaked during a monitoring activation duration (on duration), and in the dormant state during a dormant duration (opportunity for DRX). The terminal device in the dormant state no longer receives the PDCCH, but can receive data from other physical channels, such as PDSCH and ACK/NACK.

A network device can tell a DRX parameter of a certain terminal device through an RRCconnectionReconfig (RRC connection configuration signaling) or through an RRCconnectionSetup (RRC connection establishment) signaling. For several basic timers: 1) onDurationTimer: a number of PDCCH subframes continuously monitored from a beginning of one DRX cycle; 2) drx-InactivityTimer: a number of consecutive PDCCH subframes that remain at the On Duration state after the terminal successfully decodes a PDCCH indicating uplink and downlink data transmitted initially; 3) drx-RetransmissionTimer: a number of PDCCH subframes continuously monitored starting from a subframe where that the terminal expects to receive downlink retransmission; 4) longDRX-CycleStartoffset: specifying a longDRX-cycle and a drxstartfset; 5) shortDRX-cycle: a number of subframes that a shortDRX cycle lasts; 6) drxShortCycleTimer: specifying how long the terminal uses a short DRX cycle. This value is a multiple of the short DRX cycle.

The present disclosure provides a DRX function operation executed by the satellite hopping beam, and the DRX function operation is illustrated by taking the network device as a satellite base station.

Firstly, a satellite base station 1 determines a terminal device (UE) (or one or more services of a UE) to use beam information at different time points. For example, in a multi-beam satellite system, a beamforming antenna generates K point beams in a coverage area, and a total bandwidth is Mtotal. A satellite using the BH technology allocates the total bandwidth of the system to each point beam in the unit of the time slot. For example, a time window with a time slot length of P1 has a minimum time slot allocation unit of Slot, and the system allocates a corresponding number of slots to each beam according to requirements of different services of each beam and a current load situation. That is, the service of the UE is allocated with m+k time slots within the length of P1, with a beams for m time slots, and b beams for k time slots, or combines with the covered satellite base station 2 to determine one UE (or one or more services of one UE) to use beam information at different time points.

For a scenario of spectrum sharing between a mobile network and a satellite network, a pattern between point beams can be negotiated in advance between the two base stations, and the pattern is orthogonal to patterns (images) of point beams on both sides. On the other hand, due to a mobility of the UE, a dynamic beam pattern orthogonal scheme may be introduced. Because the two networks are cross operator, a dynamic interaction between networks can be challenging. So, the UE can receive signals from two network devices simultaneously. If it is found that a network device 1 sends a point beam other than a static pattern, the UE may notify a network device 2 through a Medium Access Control (MAC)/DCI signaling that carries a power value information. Based on a report of the UE, the network device 2 determines whether to modify the transmission of the point beam. It can be understood that the satellite base station can allocate the time slots corresponding to each point beam based on a service requirement of the terminal device covered by the satellite base station and the current load situation of the base station, and send point beam information covering the UE to the UE. That is, the point beam information includes a point beam sequence and a time slot allocated for the point beam sequence. The time slot of the point beam sequence is allocated by the satellite base station based on the service requirement of the terminal covered by a plurality of point beams of the network device and the current load situation of the network device.

Secondly, the satellite base station 1 determines the DRX parameter based on a service characteristic of the UE.

The satellite base station 1 can send the determined beam information and the DRX parameter to the terminal device UE. In the present disclosure, a state where the UE does not monitor a PDCCH scheduling is referred to as the dormant state, and otherwise, it is referred to as the On Duration state.

The terminal device determines the state of the terminal device based on the sent point beam information and the DRX parameter, to improve the power saving effect. That is, by using usage information of the hopping beam and the DRX parameter, a function of the DRX and a use of a UE-end timer are redesigned to determine the state of the terminal device and improve the power saving effect.

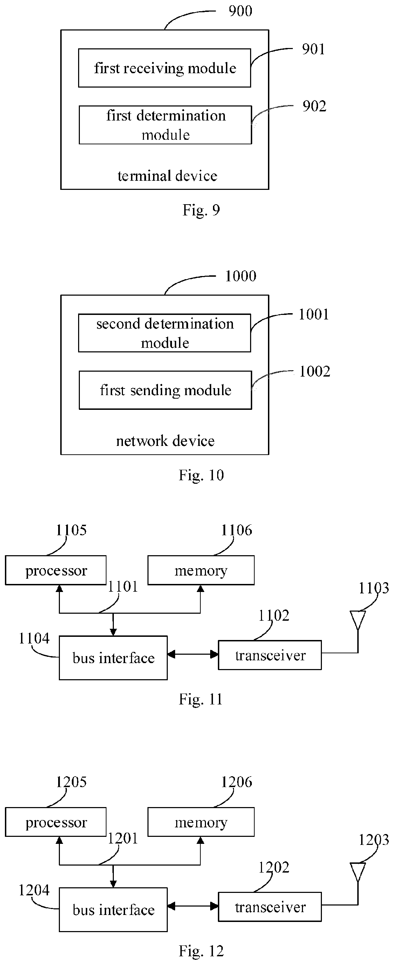

Referring to Fig. 9, Fig. 9 is a schematic diagram of a terminal device provided in an embodiment of the present disclosure. As shown in Fig. 9, the terminal device 900 includes:
a first receiving module 901, configured to receive network assistance information and a first state parameter sent by a network device; and
a first determination module 902, configured to determine an operation of the terminal device based on the network assistance information and the first state parameter.

In an embodiment, the network assistance information includes at least one of the following information:
position information of at least one Non-Terrestrial Network;
orbit information of at least one Non-Terrestrial Network; or
beam information of at least one Non-Terrestrial Network, in which the beam information of at least one Non-Terrestrial Network includes at least one of the following information:
   antenna gain information of at least one Non-Terrestrial Network at a designated time point;
   antenna gain information of at least one Non-Terrestrial Network at a designated position; or
   antenna gain information of at least one Non-Terrestrial Network at a distance of the designated lowest point.

In an embodiment, receiving the network assistance information sent by the network device includes at least one of the following:
receiving a system message and/or a dedicated signaling sent by the Non-Terrestrial Network node and/or another network node, and reading the network assistance information from the system message and/or the dedicated signaling; or
receiving system messages and/or dedicated signalings sent by the Non-Terrestrial Network node and/or another network node multiple times, and reading the network assistance information from the system messages and/or the dedicated signalings.

In an embodiment, receiving the system message and/or the dedicated signaling sent by the Non-Terrestrial Network node and/or another network node and reading the network assistance information from the system message and/or the dedicated signaling includes at least one of the following:
merging, by the terminal device, the system message and/or the dedicated signaling sent by the Non-Terrestrial Network node and/or another network node to obtain first merged information, and reading the network assistance information from the first merged information; or
merging, by the terminal device, system messages and/or dedicated signalings sent by a plurality of Non-Terrestrial Network nodes to obtain second merged information and reading the network assistance information from the second merged information.

In an embodiment, receiving the system messages and/or the dedicated signalings sent by the Non-Terrestrial Network node and/or another network node multiple times and reading the network assistance information from the system messages and/or the dedicated signalings includes at least one of the following:
receiving, by the terminal device, the system messages and/or the dedicated signalings sent by the Non-Terrestrial Network node multiple times, obtaining third merged information by merging the system messages and/or the dedicated signalings, and reading the network assistance information from the third merged information;
receiving, by the terminal device, the system messages and/or the dedicated signalings sent by another network node multiple times, obtaining fourth merged information by merging the system messages and/or the dedicated signalings, and reading the network assistance information from the fourth merged information; or
receiving, by the terminal device, the system messages and/or the dedicated signalings sent by the Non-Terrestrial Network node and another network node multiple times, obtaining fifth merged information by merging the system messages and/or the dedicated signalings, and reading the network assistance information from the fifth merged information.

In an embodiment, receiving the network assistance information sent by the network device includes at least one of the following:
receiving a short message sent by the network device, in which the short message includes a first identifier configured to indicate whether information related to the Non-Terrestrial Network exists, and the terminal device obtains the network assistance information based on the first identifier;
receiving the first association relationship, broadcasted by the network device in the system message, of a plurality of system messages containing segments of the network assistance information, in which the terminal device obtains the network assistance information based on the first association relationship, and the first association relationship includes labels and/or an order of the system messages indicating at least one segment of the network assistance information;
receiving the second association relationship, broadcasted by a plurality of network devices in the system messages, of the system messages containing at least one segment of the network assistance information; or
receiving a SIB broadcasted by the network device, in which the SIB includes a first field, and the terminal device determines at least one of the following based on information indicated by the first field:
   the SIB containing the network assistance information or not;
   the network assistance information contained in the SIB being complete or partial;
   the position of a segment of the network assistance information contained in the SIB in the network assistance information;
   whether a segment of the network assistance information contained in the SIB is followed by a related segment of the network assistance information; or
   the SIB being a last SIB containing ephemeris information or not.

The second association relationship includes at least one of the following information:
another network device information where a segment carrying the network assistance information is located;
a number of the segments of the network assistance information;
a number of the satellites and/or information of the satellites; or
a label of SIB where a segment of the network assistance information is located;
in which, the terminal device obtains the network assistance information based on the second association relationship.

In an example, the first state parameter is determined based on a service characteristic of the terminal device.

The first state parameter includes at least one of the following:
a discontinuous reception (DRX) parameter; and
a paging parameter.

In an embodiment, the DRX parameters include durations of a plurality of timers of DRX, and the plurality of timers include a DRX inactive timer. The DRX inactive timer is started when the terminal device receives a physical downlink control channel PDCCH and the PDCCH indicates a new data transmission;

Determining the operation of the terminal device based on the network assistance information and the first state parameter includes any of the following:
during the operation of the DRX inactive timer, entering an inactive state in the case that it is determined, according to the network assistance information, that no beam is available during the operation of the DRX inactive timer;
during operation of the DRX inactive timer, entering, by the terminal device, an inactive state in the case that it is determined, according to the network assistance information, that a duration in which no beam is available is less than a duration of the DRX inactive timer and greater than a first duration during the operation of the DRX inactive timer, and entering the an On Duration state in a case that the duration in which no beam is available is ended during the operation of the DRX inactive timer; or
during operation of the DRX inactive timer, maintaining a current On Duration state in the case that it is determined, according to the network assistance information, that a duration in which no beam is available is less than or equal to the first duration during the operation of the DRX inactive timer.

In an embodiment, the first duration is the sum of a duration of processing received downlink data by the terminal device and a feedback duration of a HARQ, or a duration of a downlink DRX retransmission timer.

In an embodiment, a plurality of timers include a DRX HARQ Round Trip Time RTT timer and a DRX retransmission timer. The DRX HARQ RTT timer is started when the terminal device has an error in decoding received physical downlink shared channel (PDSCH).

Determining the operation of the terminal device based on the network assistance information and the first state parameter includes:
during operation of the DRX HARQ RTT timer, maintaining a current inactive state in the case that it is determined, according to the network assistance information, that a duration in which no beam is available during a first period is greater than or equal to a second duration, and not starting the DRX retransmission timer in a case that the DRX HARQ RTT timer overtimes and is reset; or
during operation of the DRX HARQ RTT timer, maintaining a current inactive state in the case that it is determined, according to the network assistance information, that a duration in which no beam is available during the first period is less than the second duration, and starting the DRX retransmission timer in a case that the DRX HARQ RTT timer overtimes and is reset;
in which, the first period is a sum of an operation period of the DRX HARQ RTT timer and a second period, the start time point of the second period is a timeout time point of the DRX HARQ RTT timer, and an end time point of the second period is the time point of a sum of the timeout time point and a duration of the DRX retransmission timer.

In an embodiment, the second duration is a sum of a duration of the DRX HARQ RTT timer and a duration of the DRX retransmission timer.

In an embodiment, determining the operation of the terminal device based on the network assistance information and the first state parameter includes any of the following:
during operation of the DRX retransmission timer, entering an inactive state in the case that it is determined, according to the network assistance information, that no beam is available during the operation of the DRX retransmission timer;
during operation of the DRX retransmission timer, entering an inactive state in the case that it is determined, according to the network assistance information, that a duration in which no beam is available during the operation of the DRX retransmission timer is less than a duration of the DRX retransmission timer and greater than a third duration, and entering the an On Duration state in a case that the duration in which no beam is available ends during the operation of the DRX retransmission timer; or
during operation of the DRX retransmission timer, maintaining a current On Duration state in the case that it is determined, according to the network assistance information, that a duration in which no beam is available during the operation of the DRX retransmission timer is less than or equal to the third duration.

In an embodiment, the third duration is a sum of a duration of processing received downlink data by the terminal device and a feedback duration of a hybrid automatic retransmission request HARQ.

In an embodiment, the plurality of timers further include a first timer, which is started after the terminal device sends the scheduling request SR.

Determining the operation of the terminal device based on the network assistance information and the first state parameter includes any of the following:
during operation of the first timer, entering the inactive state in the case that it is determined, according to the network assistance information, that no beam is available during the operation of the first timer;
during operation of the first timer, controlling the terminal device to enter an inactive state in the case that it is determined, according to the network assistance information, that a duration in which no beam is available during the operation of the first timer is less than a duration of the first timer and greater than a fourth duration, and controlling the terminal to enter the On Duration state in the case that the duration in which no beam is available during the operation of the first timer ends; or
during operation of the first timer, maintaining a current On Duration state in the case that it is determined, according to the network assistance information, that a duration in which no beam is available during the operation of the first timer is less than or equal to the fourth duration.

In an embodiment, the fourth duration is a duration from a time point when the terminal device sends the target scheduling request to a time point when the terminal device receives an uplink scheduling corresponding to the target scheduling request.

In an embodiment, the terminal device further includes:
a paging occasion determination module, configured to calculate a paging occasion corresponding to the terminal device according to the paging parameter; and
a third determination module, configured to determine, according to the network assistance information, that a duration in which no beam is available at the paging occasion corresponding to the terminal device is less than a duration of one paging occasion the terminal device maintains an active state and performs paging message reception, or determine that the duration in which no beam is available at the paging occasion corresponding to the terminal device is greater than or equal to the duration of one paging occasion the terminal device enters an inactive state and stops the paging message reception.

Refer to Fig. 10, Fig. 10 is a schematic diagram of a network device provided in an embodiment of the present disclosure. As shown in Fig. 10, the network device 1000 includes:
a second determination module 1001, configured to determine a first state parameter based on a service characteristic of a terminal device; and
a first sending module 1002, configured to send network assistance information and the first state parameter to the terminal device.

In an embodiment, the network assistance information includes at least one of the following information:
position information of a Non-Terrestrial Network;
orbit information of a Non-Terrestrial Network; or
beam information of a Non-Terrestrial Network, in which the beam information of the Non-Terrestrial Network includes at least one of the following information:
   antenna gain information of the Non-Terrestrial Network at the designated time point;
   antenna gain information for the Non-Terrestrial Network at the designated position; or
   antenna gain information of the Non-Terrestrial Network at the distance of the designated lowest point.

In an embodiment, sending the network assistance information and the first state parameter to the terminal device includes at least one of the following:
sending a system message and/or a dedicated signaling to the terminal device, in which the system message and/or the dedicated signaling includes the network assistance information; or
sending system messages and/or dedicated signalings to the terminal device multiple times, in which the system messages and/or the dedicated signalings include the network assistance information.

In an embodiment, sending the network assistance information to the terminal device further includes at least one of the following:
sending a short message to the terminal device, in which the short message includes the first identifier configured to indicate whether information related to the Non-Terrestrial Network exists, and the first identifier is configured for the terminal device to obtain the network assistance information based on the first identifier;
broadcasting a first association relationship of a plurality of system messages containing segments of the network assistance information to the terminal device through the system message, in which the first association relationship is configured for the terminal device to obtain the network assistance information based on the association relationship; or
broadcasting a SIB to the terminal device, in which the SIB includes a first field, and information indicated by the first field is configured for the terminal device to determine at least one of the following based on the information indicated by the first field:
   the SIB containing the network assistance information or not;
   the network assistance information contained in the SIB being complete or partial;
   a position of a segment of the network assistance information contained in the SIB in the network assistance information;
   whether a segment of the network assistance information contained in the SIB is followed by a related segment of the network assistance information; or
   the SIB being a last SIB containing ephemeris information or not.

The embodiments of the present disclosure also provide a terminal device including a processor, a memory, and a program stored on the memory and executable on the processor. When the program is executed by the processor, various processes of the above operation determination method embodiment are implemented, and the same technical effect can be achieved. In order to avoid duplication, it will not be repeated here.

Specifically, as shown in Fig. 11, the embodiments of the present disclosure also provide a terminal device including a bus 1101, a transceiver 1102, an antenna 1103, a bus interface 1104, a processor 1105, and a memory 1106.

The transceiver is configured to receive network assistance information and a first state parameter sent by a network device.

The processor is configured to determine operation of a terminal device based on the network assistance information and the first state parameter.

In an embodiment, the network assistance information includes at least one of the following information:
position information of at least one Non-Terrestrial Network;
orbit information of at least one Non-Terrestrial Network; or
beam information of at least one Non-Terrestrial Network, in which the beam information of at least one Non-Terrestrial Network includes at least one of the following information:
   antenna gain information of at least one Non-Terrestrial Network at the designated time point;
   antenna gain information of at least one Non-Terrestrial Network at the designated position; or
   antenna gain information of at least one Non-Terrestrial Network at the distance of the designated lowest point.

In an embodiment, receiving the network assistance information sent by the network device includes at least one of the following:
receiving a system message and/or a dedicated signaling sent by a Non-Terrestrial Network node and/or another network node, and reading the network assistance information from the system message and/or the dedicated signaling; or
receiving system messages and/or dedicated signalings sent by a Non-Terrestrial Network node and/or another network node multiple times, and reading the network assistance information from the system messages and/or the dedicated signalings.

In an embodiment, receiving the system message and/or the dedicated signaling sent by the Non-Terrestrial Network node and/or another network node and reading the network assistance information from the system message and/or the dedicated signaling includes at least one of the following:
merging, by the terminal device, the system message and/or the dedicated signaling sent by the Non-Terrestrial Network node and/or another network node to obtain first merged information, and reading the network assistance information from the first merged information; or
merging, by the terminal device, system messages and/or dedicated signalings sent by a plurality of Non-Terrestrial Network nodes to obtain second merged information, and reading the network assistance information from the second merged information.

In an embodiment, receiving the system messages and/or the dedicated signalings sent by the Non-Terrestrial Network node and/or another network node multiple times and reading the network assistance information from the system messages and/or the dedicated signalings includes at least one of the following:
receiving, by the terminal device, the system messages and/or the dedicated signalings sent by the Non-Terrestrial Network node multiple times, obtaining third merged information by merging the system messages and/or the dedicated signalings, and reading the network assistance information from the third merged information;
receiving, by the terminal device, the system messages and/or the dedicated signalings sent by another network node multiple times, obtaining fourth merged information by merging the system messages and/or the dedicated signalings, and reading the network assistance information from the fourth merged information; or
receiving, by the terminal device, the system messages and/or the dedicated signalings sent by the Non-Terrestrial Network node and another network node multiple times, obtaining fifth merged information by merging the system messages and/or the dedicated signalings, and reading the network assistance information from the fifth merged information.

In an embodiment, receiving the network assistance information sent by the network device includes at least one of the following:
receiving a short message sent by the network device, in which the short message includes a first identifier configured to indicate whether information related to the Non-Terrestrial Network exists, and the terminal device obtains the network assistance information based on the first identifier;
receiving a first association relationship, broadcasted by the network device in the system message, of a plurality of system messages containing segments of the network assistance information, in which the terminal device obtains the network assistance information based on the first association relationship, and the first association relationship includes labels and/or an order of the system messages indicating at least one segment of the network assistance information;
receiving a second association relationship, broadcasted by a plurality of network devices in the system messages, of the system messages containing at least one segment of the network assistance information; or
receiving a SIB broadcasted by the network device, in which the SIB includes a first field, and the terminal device determines at least one of the following based on information indicated by the first field:
   the SIB containing the network assistance information or not;
   the network assistance information contained in the SIB being complete or partial;
   a position of a segment of the network assistance information contained in the SIB in the network assistance information;
   whether a segment of the network assistance information contained in the SIB is followed by a related segment of the network assistance information; or
   the SIB being a last SIB containing ephemeris information or not.

The second association relationship includes at least one of the following information:
another network device information where a segment carrying the network assistance information is located;
a number of the segments of the network assistance information;
a number of the satellites and/or information of the satellites; or
a label of a SIB where a segment of the network assistance information is located;
in which, the terminal device obtains the network assistance information based on the second association relationship.

In an example, the first state parameter is determined based on a service characteristic of the terminal device.

The first state parameter includes at least one of the following:
the discontinuous reception DRX parameter; or
the paging parameter.

In an embodiment, the DRX parameters include durations of a plurality of timers of DRX, and the plurality of timers include a DRX inactive timer. The DRX inactive timer is started when the terminal device receives a physical downlink control channel PDCCH and the PDCCH indicates a new data transmission.

Determining the operation of the terminal device based on the network assistance information and the first state parameter includes any of the following:
during operation of the DRX inactive timer, entering an inactive state in the case that it is determined, according to the network assistance information, that no beam is available during the operation of the DRX inactive timer;
during operation of the DRX inactive timer, entering, by the terminal device, an inactive state in the case that it is determined, according to the network assistance information, that a duration in which no beam is available is less than a duration of the DRX inactive timer and greater than a first duration during the operation of the DRX inactive timer, and entering the On Duration state in a case that the duration in which no beam is available is ended during the operation of the DRX inactive timer; or
during operation of the DRX inactive timer, maintaining a current On Duration state in the case that it is determined, according to the network assistance information, that a duration in which no beam is available is less than or equal to the first duration during the operation of the DRX inactive timer.

In an embodiment, the first duration is a sum of a duration of processing received downlink data by the terminal device and the feedback duration of the hybrid automatic retransmission request HARQ, or the duration of the downlink DRX retransmission timer.

In an embodiment, the plurality of timers include a DRX HARQ Round Trip Time RTT timer and a DRX retransmission timer. The DRX HARQ RTT timer is started when the terminal device has an error in decoding received physical downlink shared channel PDSCH.

Determining the operation of the terminal device based on the network assistance information and the first state parameter includes:
during operation of the DRX HARQ RTT timer, maintaining a current inactive state in the case that it is determined, according to the network assistance information, that a duration in which no beam is available during a first period is greater than or equal to a second duration, and not starting the DRX retransmission timer in a case that the DRX HARQ RTT timer overtimes and resets; and
during operation of the DRX HARQ RTT timer, maintaining the current inactive state in the case that it is determined, according to the network assistance information, that a duration in which no beam is available during a first period is less than the second duration, and starting the DRX retransmission timer in a case that the DRX HARQ RTT timer overtimes and resets;
in which, the first period is a sum of an operation period of the DRX HARQ RTT timer and a second period, a start time point of the second period is a timeout time point of the DRX HARQ RTT timer, and an end time point of the second period is a time point of a sum of the timeout time point and a duration of the DRX retransmission timer.

In an embodiment, the second duration is a sum of a duration of the DRX HARQ RTT timer and a duration of the DRX retransmission timer.

In an embodiment, determining the operation of the terminal device based on the network assistance information and the first state parameter includes any of the following:
during operation of the DRX retransmission timer, entering an inactive state in the case that it is determined, according to the network assistance information, that no beam is available during the operation of the DRX retransmission timer;
during operation of the DRX retransmission timer, entering the inactive state in the case that it is determined, according to the network assistance information, that a duration in which no beam is available during the operation of the DRX retransmission timer is less than a duration of the DRX retransmission timer and greater than a third duration, and entering the an On Duration state in a case that the duration in which no beam is available ends during the operation of the DRX retransmission timer; and
during operation of the DRX retransmission timer, maintaining the current On Duration state in the case that it is determined, according to the network assistance information, that a duration in which no beam is available during the operation of the DRX retransmission timer is less than or equal to the third duration during the operation of the DRX retransmission timer.

In an embodiment, the third duration is a sum of a duration of processing received downlink data by the terminal device and the feedback duration of the hybrid automatic retransmission request HARQ.

In an embodiment, the plurality of timers further include a first timer, which is started after the terminal device sends a scheduling request SR.

Determining the operation of the terminal device based on the network assistance information and the first state parameter includes any of the following:
during operation of the first timer, entering an inactive state in the case that it is determined, according to the network assistance information, that no beam is available during the operation of the first timer;
during operation of the first timer, controlling the terminal device to enter the inactive state in the case that it is determined, according to the network assistance information, that a duration in which no beam is available during the operation of the first timer is less than a duration of the first timer and greater than a fourth duration, and controlling the terminal to enter the On Duration state in the case that the duration in which no beam is available during the operation of the first timer ends; or
during operation of the first timer, maintaining the current On Duration state in the case that it is determined, according to the network assistance information, that a duration in which no beam is available during the operation of the first timer is less than or equal to the fourth duration.

In an embodiment, the fourth duration is a duration from a time point when the terminal device sends a target scheduling request to a time point when the terminal device receives an uplink scheduling corresponding to the target scheduling request.

In an embodiment, the processor is further configured to determine a paging occasion corresponding to the terminal device according to the paging parameter.

The processor is configured to determine, according to the network assistance information, that a duration in which no beam is available at the paging occasion corresponding to the terminal device is less than a duration of one paging occasion, the terminal device maintains the On Duration state and performs the paging message reception, or determine that the duration in which no beam is available at the paging occasion corresponding to the terminal device is greater than or equal to the duration of one paging occasion, the terminal device enters an inactive state and stops the paging message reception.

The terminal device calculates the paging occasion corresponding to the terminal device according to the paging parameter.

The terminal device maintains the On Duration state and performs the paging message reception in the case that it is determined, according to the network assistance information, that a duration in which no beam is available at the paging occasion corresponding to the terminal device is less than the duration of one paging occasion, or the terminal device enters the inactive state and stops the paging message reception in the case that it is determined that the duration in which no beam is available at the paging occasion corresponding to the terminal device is greater than or equal to the duration of one paging occasion.

In Fig. 11, a bus architecture (represented by the bus 1101) can include any number of interconnected buses and bridges, and the bus 1101 links various circuits including one or more processors represented by the processor 1105 and the memories represented by the memory 1106 together. The bus 1101 can also link various other circuits such as a peripheral device, a regulator, and a power management circuit together, which are well-known in the art, and therefore, is not further described them therein. The bus interface 1104 provides an interface between the bus 1101 and the transceiver 1102. The transceiver 1102 can be one component or a plurality of components, such as a plurality of receivers and a plurality of transmitters, and the transceiver 1102 provides units for communication with various other apparatuses on a transmission medium. The data processed by the processor 1105 is transmitted through the antenna 1103 on a wireless medium. Furthermore, the antenna 1103 also receives the data and transmits the data to the processor 1105.

The processor 1105 is responsible for managing the bus 1101 and a typical processing, and can also provide various functions, including a timing, a peripheral interface, a voltage regulation, a power management, and other control functions. The memory 1106 can be configured to store the data used by the processor 1105 during operation.

Optionally, the processor 1105 can be a central processing unit (CPU), an application specific integrated circuit (ASIC), a Field Programmable Gate Array (FPGA), or a Complex Programmable Logic Device (CPLD).

The embodiments of the present disclosure also provide a computer-readable storage medium, on which a computer program is stored. When the computer program is executed by the processor, the various processes of the above operation determination method embodiment are implemented, and the same technical effect can be achieved. In order to avoid duplication, it will not be repeated here. The computer-readable storage medium can be a Read-Only Memory (ROM), a Random Access Memory (RAM), a disk or an optical disc, etc.

The embodiments of the present disclosure also provide a terminal device including a processor, a memory, and a program stored on the memory and executable on the processor. When the program is executed by the processor, various processes of the above operation determination method embodiment are implemented, and the same technical effect can be achieved. In order to avoid duplication, it will not be repeated here.

Specifically, as shown in Fig. 12, the embodiments of the present disclosure also provide a network device including a bus 1201, a transceiver 1202, an antenna 1203, a bus interface 1204, a processor 1205, and a memory 1206.

The processor is configured to determine a first state parameter based on a service characteristic of a terminal device.

The transceiver is configured to send network assistance information and the first state parameter to the terminal device.

In an embodiment, the network assistance information includes at least one of the following information:
position information of the Non-Terrestrial Network;
orbit information of the Non-Terrestrial Network; or
beam information of the Non-Terrestrial Network, in which the beam information of the Non-Terrestrial Network includes at least one of the following information:
   antenna gain information of the Non-Terrestrial Network at the designated time point;
   antenna gain information for the Non-Terrestrial Network at the designated position; or
   antenna gain information of the Non-Terrestrial Network at the distance of the designated lowest point.

In an embodiment, sending the network assistance information and the first state parameter to the terminal device includes at least one of the following:
sending a system message and/or a dedicated signaling to the terminal device, in which the system message and/or the dedicated signaling includes the network assistance information; and
sending system messages and/or dedicated signalings to the terminal device multiple times, in which the system messages and/or the dedicated signalings include the network assistance information.

In an embodiment, sending the network assistance information to the terminal device further includes at least one of the following:
sending a short message to the terminal device, in which the short message includes a first identifier configured to indicate whether information related to the Non-Terrestrial Network exists, and the first identifier is configured for the terminal device to obtain the network assistance information based on the first identifier;
broadcasting a first association relationship of a plurality of system messages containing segments of the network assistance information to the terminal device through the system message, in which the first association relationship is configured for the terminal device to obtain the network assistance information based on the association relationship; or
broadcasting a SIB to the terminal device, in which the SIB includes a first field, and information indicated by the first field is configured for the terminal device to determine at least one of the following based on the information indicated by the first field:
   the SIB containing the network assistance information or not;
   the network assistance information contained in the SIB being complete or partial;
   a position of a segment of the network assistance information contained in the SIB in the network assistance information;
   whether a segment of the network assistance information contained in the SIB is followed by a related segment of the network assistance information; or
   the SIB being a last SIB containing ephemeris information or not.

In Fig. 12, a bus architecture (represented by the bus 1201) can include any number of interconnected buses and bridges, and the bus 1201 links various circuits including one or more processors represented by the processor 1205 and the memories represented by the memory 1206 together. The bus 1201 can also link various other circuits such as a peripheral device, a regulator, and a power management circuit together, which are well-known in the art, and therefore, is not further described them therein. The bus interface 1204 provides an interface between the bus 1201 and the transceiver 1202. The transceiver 1202 can be one component or a plurality of components, such as a plurality of receivers and a plurality of transmitters, and the transceiver 1202 provides units for communication with various other apparatuses on a transmission medium. The data processed by the processor 1205 is transmitted through the antenna 1203 on a wireless medium. Furthermore, the antenna 1203 also receives the data and transmits the data to the processor 1205.

The processor 1205 is responsible for managing the bus 1201 and a typical processing, and can also provide various functions, including a timing, a peripheral interface, a voltage regulation, a power management, and other control functions. The memory 1206 can be configured to store the data used by the processor 1205 during operation.

Optionally, the processor 1205 can be a CPU, an ASIC, a FPGA, or a CPLD.

The embodiments of the present disclosure also provide a computer-readable storage medium, on which a computer program is stored. When the computer program is executed by the processor, the various processes of the above operation determination method embodiment are implemented, and the same technical effect can be achieved. In order to avoid duplication, it will not be repeated here. The computer-readable storage medium can be the ROM, the RAM, the disk or the optical disc, etc.

It should be noted that in this specification, terms "include", "contain", or any other variation thereof are intended to encompass non-exclusive inclusion, such that a process, a method, an item, or a apparatus that includes a series of elements not only includes those elements, but also includes other elements that are not explicitly listed, or also includes elements inherent to such process, method, item, or apparatus. Without further limitations, an element limited by the statement "include a..." does not exclude an existence of another identical element in the process, the method, the item, or the apparatus that includes that element.

Through the description of the above implementation, those skilled in the art can clearly understand that the above implementation can be achieved through a software and a necessary general hardware platform, and of course, a hardware can also be used. However, in many cases, the former is the better implementation. Based on this understanding, the technical solution of the present disclosure naturally or in other words, a part that contribute to the existing technology can be reflected in a form of a software product. The computer software product is stored in a storage medium (such as the ROM/RAM, the disk, the CD), and includes several instructions to enable a terminal (can be a mobile phone, a computer, a server, an air conditioner, or a terminal device, etc.) to execute the methods of the various embodiments of the present disclosure.

It can be understood that the embodiments described in the embodiments of the present disclosure can be implemented using hardware, software, firmware, middleware, a microcode, or a combination thereof. For hardware implementation, a module, a unit, a submodule, a subunit, etc. can be implemented in one or more Application Specific Integrated Circuits (ASIC), Digital Signal Processors (DSP), DSP Devices (DSPD), Programmable Logic Devices (PLD), Field-Programmable Gate Arrays (FPGA), general-purpose processors, controllers, microcontrollers, microprocessors, other electronic units or combinations thereof for performing the functions described of the present disclosure.

The embodiments in the present disclosure are described above in conjunction with the accompanying drawings, but the present disclosure is not limited to the specific implementations mentioned above. The specific implementation mentioned above is only illustrative and not restrictive. Under an enlightenment of the present disclosure, those ordinary skilled in the art can also make many forms which belong to the protection of the present disclosure, without departing from the scope protected by the purpose and claims of the present disclosure,

## Claims

1. An operation determination method, performed by a terminal device, comprising:
receiving network assistance information and a first state parameter sent by a network device; and
determining an operation of the terminal device based on the network assistance information and the first state parameter.

2. The operation determination method according to claim 1, wherein the network assistance information comprises at least one of:
position information of at least one Non-Terrestrial Network;
orbit information of at least one Non-Terrestrial Network; or
beam information of at least one Non-Terrestrial Network, wherein the beam information of the at least one Non-Terrestrial Network comprises at least one of:
antenna gain information of the at least one Non-Terrestrial Network at a designated time point;
antenna gain information of the at least one Non-Terrestrial Network at a designated position; or
antenna gain information of the at least one Non-Terrestrial Network at a distance of a designated lowest point.

3. The operation determination method according to claim 1, wherein receiving the network assistance information sent by the network device comprises at least one of:
receiving a system message and/or a dedicated signaling sent by a Non-Terrestrial Network node and/or another network node, and reading the network assistance information from the system message and/or the dedicated signaling; or
receiving system messages and/or dedicated signalings sent by a Non-Terrestrial Network node and/or another network node multiple times, and reading the network assistance information from the system messages and/or the dedicated signalings.

4. The operation determination method according to claim 3, wherein receiving the system message and/or the dedicated signaling sent by the Non-Terrestrial Network node and/or another network node and reading the network assistance information from the system message and/or the dedicated signaling comprises at least one of:
merging, by the terminal device, the system message and/or the dedicated signaling sent by the Non-Terrestrial Network node and/or another network node to obtain first merged information, and reading the network assistance information from the first merged information; or
merging, by the terminal device, system messages and/or dedicated signalings sent by a plurality of Non-Terrestrial Network nodes to obtain second merged information, and reading the network assistance information from the second merged information.

5. The operation determination method according to claim 3, wherein receiving the system messages and/or the dedicated signalings sent by the Non-Terrestrial Network node and/or another network node multiple times and reading the network assistance information from the system messages and/or the dedicated signalings comprising at least one of:
receiving, by the terminal device, the system messages and/or the dedicated signalings sent by the Non-Terrestrial Network node multiple times, obtaining third merged information by merging the system messages and/or the dedicated signalings, and reading the network assistance information from the third merged information;
receiving, by the terminal device, the system messages and/or the dedicated signalings sent by another network node multiple times, obtaining fourth merged information by merging the system messages and/or the dedicated signalings, and reading the network assistance information from the fourth merged information; or
receiving, by the terminal device, the system messages and/or the dedicated signalings sent by the Non-Terrestrial Network node and another network node multiple times, obtaining fifth merged information by merging the system messages and/or the dedicated signalings, and reading the network assistance information from the fifth merged information.

6. The operation determination method according to claim 3, wherein receiving the network assistance information sent by the network device further comprising at least one of:
receiving a short message sent by the network device, wherein the short message comprises a first identifier configured to indicate whether information related to the Non-Terrestrial Network exists, and the terminal device obtains the network assistance information based on the first identifier;
receiving a first association relationship, broadcasted by the network device in the system message, of a plurality of system messages containing segments of the network assistance information, wherein the terminal device obtains the network assistance information based on the first association relationship, and the first association relationship comprises labels and/or an order of the system messages indicating at least one segment of the network assistance information;
receiving a second association relationship, broadcasted by a plurality of network devices in the system messages, of the system messages containing at least one segment of the network assistance information; or
receiving a system information block (SIB) broadcasted by the network device, wherein the SIB comprises a first field, and the terminal device determines at least one of the following based on information indicated by the first field:
the SIB containing the network assistance information or not;
the network assistance information contained in the SIB being complete or partial;
a position of a segment of the network assistance information contained in the SIB in the network assistance information;
whether a segment of the network assistance information contained in the SIB is followed by a related segment of the network assistance information; or
the SIB being a last SIB containing ephemeris information or not;
wherein the second association relationship comprises at least one of:
another network device information where a segment carrying the network assistance information is located;
a number of the segments of the network assistance information;
a number of satellites and/or information of the satellites; or
a label of a SIB where a segment of the network assistance information is located;
wherein, the terminal device obtains the network assistance information based on the second association relationship.

7. The operation determination method according to claim 1, wherein the first state parameter is determined by the network device based on a service characteristic of the terminal device;
the first state parameter comprises at least one of:
a discontinuous reception (DRX) parameter; or
a paging parameter.

8. The operation determination method according to claim 7, wherein the DRX parameter comprises durations of a plurality of timers of DRX, the plurality of timers comprise a DRX inactive timer, and the DRX inactive timer is started when the terminal device receives a physical downlink control channel (PDCCH) and the PDCCH indicates a new data transmission;
determining the operation of the terminal device based on the network assistance information and the first state parameter comprises any of:
during operation of the DRX inactive timer, entering an inactive state in a case of determining, according to the network assistance information, that no beam is available during the operation of the DRX inactive timer;
during operation of the DRX inactive timer, enter, by the terminal device, an inactive state in a case of determining, according to the network assistance information, that a duration in which no beam is available is less than a duration of the DRX inactive timer and greater than a first duration during the operation of the DRX inactive timer, and entering an active state in a case that the duration in which no beam is available is ended during the operation of the DRX inactive timer; or
during operation of the DRX inactive timer, maintaining a current active state in a case of determining, according to the network assistance information, that a duration in which no beam is available is less than or equal to the first duration during the operation of the DRX inactive timer.

9. The operation determination method according to claim 8, wherein the first duration is a sum of a duration of processing received downlink data by the terminal device and a feedback duration of a hybrid automatic retransmission request (HARQ), or a duration of a downlink DRX retransmission timer.

10. The operation determination method according to claim 7, wherein the DRX parameter comprises durations of a plurality of timers of DRX, the plurality of timers comprise a DRX HARQ Round Trip Time (RTT) timer and a DRX retransmission timer, and the DRX HARQ RTT timer is started when the terminal device has an error in decoding received physical downlink shared channel (PDSCH);
determining the operation of the terminal device based on the network assistance information and the first state parameter comprises:
during operation of the DRX HARQ RTT timer, maintaining a current inactive state in a case of determining, according to the network assistance information, that a duration in which no beam is available during a first period is greater than or equal to a second duration, and not starting the DRX retransmission timer in a case that the DRX HARQ RTT timer overtimes and is reset; or
during operation of the DRX HARQ RTT timer, maintaining the current inactive state in a case of determining, according to the network assistance information, that a duration in which no beam is available during the first period is less than the second duration, and starting the DRX retransmission timer in a case that the DRX HARQ RTT timer overtimes and is reset;
wherein the first period is a sum of an operation period of the DRX HARQ RTT timer and a second period, a start time point of the second period is a timeout time point of the DRX HARQ RTT timer, and an end time point of the second period is a time point of a sum of the timeout time point and a duration of the DRX retransmission timer.

11. The operation determination method according to claim 10, wherein the second duration is a sum of a duration of the DRX HARQ RTT timer and a duration of the DRX retransmission timer.

12. The operation determination method according to claim 10, wherein determining the operation of the terminal device based on the network assistance information and the first state parameter comprises any of:
during operation of the DRX retransmission timer, entering an inactive state in a case of determining, according to the network assistance information, that no beam is available during the operation of the DRX retransmission timer;
during operation of the DRX retransmission timer, entering an inactive state in a case of determining, according to the network assistance information, that a duration in which no beam is available during the operation of the DRX retransmission timer is less than a duration of the DRX retransmission timer and greater than a third duration, and entering an active state in a case that the duration in which no beam is available ends during the operation of the DRX retransmission timer; or
during operation of the DRX retransmission timer, maintaining a current active state in a case of determining, according to the network assistance information, that a duration in which no beam is available during the operation of the DRX retransmission timer is less than or equal to a third duration.

13. The operation determination method according to claim 12, wherein the third duration is a sum of a duration of processing received downlink data by the terminal device and a feedback duration of a HARQ.

14. The operation determination method according to claim 7, wherein the DRX parameter comprises durations of a plurality of timers of DRX, the plurality of timers comprise a first timer, and the first timer is started after the terminal device sends a scheduling request (SR); and
determining the operation of the terminal device based on the network assistance information and the first state parameter further comprises any of:
during operation of the first timer, entering an inactive state in a case of determining, according to the network assistance information, that no beam is available during the operation of the first timer;
during operation of the first timer, controlling the terminal device to enter an inactive state in a case of determining, according to the network assistance information, that a duration in which no beam is available during the operation of the first timer is less than a duration of the first timer and greater than a fourth duration, and controlling the terminal to enter an active state in a case that the duration in which no beam is available during the operation of the first timer ends; or
during operation of the first timer, maintaining a current active state in a case of determining, according to the network assistance information, that a duration in which no beam is available during the operation of the first timer is less than or equal to a fourth duration.

15. The operation determination method according to claim 14, wherein the fourth duration is a duration from a time point when the terminal device sends a target scheduling request to a time point when the terminal device receives an uplink scheduling corresponding to the target scheduling request.

16. The operation determination method according to claim 7, further comprising:
determining, by the terminal device, a paging occasion corresponding to the terminal device based on the paging parameter;
wherein the terminal device maintains an active state and performs paging message reception in a case of determining, according to the network assistance information, that a duration in which no beam is available at the paging occasion corresponding to the terminal device is less than a duration of one paging occasion; or the terminal device enters an inactive state and stops the paging message reception in a case of determining that the duration in which no beam is available at the paging occasion corresponding to the terminal device is greater than or equal to the duration of one paging occasion.

17. An information sending method, performed by a network device, comprising:
determining a first state parameter based on a service characteristic of a terminal device; and
sending network assistance information and the first state parameter to the terminal device.

18. The information sending method according to claim 17, wherein the network assistance information comprises at least one of:
position information of a Non-Terrestrial Network;
orbit information of a Non-Terrestrial Network; or
beam information of a Non-Terrestrial Network, wherein the beam information of the Non-Terrestrial Network comprises at least one of:
antenna gain information of the Non-Terrestrial Network at a designated time point;
antenna gain information of the Non-Terrestrial Network at a designated position; or
antenna gain information of the Non-Terrestrial Network at a distance of a designated lowest point.

19. The information sending method according to claim 17, wherein sending the network assistance information and the first state parameter to the terminal device comprises at least one of:
sending a system message and/or a dedicated signaling to the terminal device, wherein the system message and/or the dedicated signaling comprises the network assistance information; or
sending system messages and/or dedicated signalings to the terminal device multiple times, wherein the system messages and/or the dedicated signalings comprise the network assistance information.

20. The information sending method according to claim 19, wherein sending the network assistance information to the terminal device further comprises at least one of:
sending a short message to the terminal device, wherein the short message comprises a first identifier configured to indicate whether information related to the Non-Terrestrial Network exists, and the first identifier is configured for the terminal device to obtain the network assistance information based on the first identifier;
broadcasting a first association relationship of a plurality of system messages containing segments of the network assistance information to the terminal device through the system message, wherein the first association relationship is configured for the terminal device to obtain the network assistance information based on the association relationship; or
broadcasting a system information block (SIB) to the terminal device, wherein the SIB comprises a first field, and information indicated by the first field is configured for the terminal device to determine at least one of the following based on the information indicated by the first field:
the SIB containing the network assistance information or not;
the network assistance information contained in the SIB being complete or partial;
a position of a segment of the network assistance information contained in the SIB in the network assistance information;
whether a segment of the network assistance information contained in the SIB is followed by a related segment of the network assistance information; or
the SIB being a last SIB containing ephemeris information or not.

21. A terminal device, comprising:
a first receiving module, configured to receive network assistance information and a first state parameter sent by a network device; and
a first determination module, configured to determine an operation of the terminal device based on the network assistance information and the first state parameter.

22. A network device, comprising:
a second determination module, configured to determine a first state parameter based on a service characteristic of a terminal device; and
a first sending module, configured to send network assistance information and the first state parameter to the terminal device.

23. A terminal device, comprising a transceiver and a processor, wherein,
the transceiver is configured to receive network assistance information and a first state parameter sent by a network device; and
the processor is configured to determine an operation of the terminal device based on the network assistance information and the first state parameter.

24. A network device, comprising a transceiver and a processor, wherein,
the processor is configured to determine a first state parameter based on a service characteristic of a terminal device; and
the transceiver is configured to send network assistance information and the first state parameter to the terminal device.

25. A terminal device comprising: a processor, a memory, and a program stored on the memory and executable on the processor, wherein steps of the method according to any one of claims 1 to 16 are implemented when the program is executed by the processor.

26. A terminal device comprising: a processor, a memory, and a program stored on the memory and executable on the processor, wherein steps of the method according to any one of claims 17 to 20 are implemented when the program is executed by the processor,

27. A computer-readable storage medium, having stored therein a computer program that, when executed by a processor, causes steps of the method according to any one of claims 1 to 16 to be implemented, or causes steps of the method according to any one of claims 17 to 20 to be implemented.
